# EUROPÄISCHE PATENTANMELDUNG

(11) **EP 1 486 730 A1**
(43) Veröffentlichungstag der Anmeldung: **15.12.2004**
(21) Anmeldenummer: 03013170.0
(22) Anmeldetag: 11.06.2003
(51) Int. Cl.: F23M 5/08

(54) **Hitzeschildelement**

(71) Anmelder: SIEMENS AKTIENGESELLSCHAFT, 80333 München (DE)
(72) Erfinder: Bolms, Hans-Thomas, Dr., 45481 Muehlheim A.D. Ruhr (DE); Huth, Michael, Dr., 45239 Essen (DE); Tiemann, Peter, 58452 Witten (DE)

(57) **Zusammenfassung**

Die Erfindung betrifft ein Hitzeschildelement (26), insbesondere für eine Brennkammer (4) einer Gasturbine (1). Das Hitzeschildelement (26) umfasst eine Wand (47) mit einer Heißseite (35) und mit einer der Heißseite (35) gegenüberliegenden Kaltseite (33). Die Kaltseite (33) ist zu Kühlungszwecken mit einem Kühlmittel (K), beispielsweise Kühlluft, beaufschlagbar. Die Kaltseite (33) weist zur Verbesserung des Wärmeaustauschs zwischen der Wand (47) und dem Kühlmittel (K) mehrere Turbolatoren (23) auf, wobei die Turbolatoren (23) ineinander übergehen, so dass ein Netz von sich kreuzenden Turbolatoren (23) auf der Kaltseite (33) gebildet ist. Die Turbolatoren (23) steigern die Kühleffizienz und erhöhen die Steifigkeit der Wand (47), so dass eine geringere Wandstärke (d) der Wand (47) realisierbar ist. Die Erfindung betrifft weiterhin eine Brennkammer (4), die mit derartigen Hitzeschildelementen (26) ausgekleidet ist, sowie eine Gasturbine (1) mit einer Brennkammer (4).

## Beschreibung

Die Erfindung betrifft ein Hitzeschildelement, insbesondere zum Schutz von Bauteilen in einer thermisch hochbelasteten Maschine, wie z.B. von Bauteilen einer Gasturbine. Die Erfindung betrifft weiterhin eine Brennkammer mit einer derartige Hitzeschildelemente aufweisende hitzebeständigen Brennkammerauskleidung sowie eine Gasturbine mit einer Brennkammer.

Bauteile in einer thermisch hochbelasteten Maschine werden beim regulären Betrieb dieser Maschine hohen Temperaturen ausgesetzt. In einer thermischen Maschine, insbesondere in einer Gasturbine, werden durch ein heißes Medium, z.B. durch ein Heißgas aus einem Verbrennungsprozess in einer Brennkammer, primär die das heiße Medium begrenzenden Oberflächen und die dazugehörigen Bauteile thermisch und thermomechanisch sehr stark belastet. Infolge von Wärmetransport durch diese begrenzenden Oberflächen, wie er beispielsweise in Form von Wärmeleitung oder Wärmestrahlung auftritt, sind darüber hinaus auch Bauteile, die nicht unmittelbar dem heißen Medium ausgesetzt sind, hohen thermischen Belastungen ausgesetzt. Somit erfüllen die dem heißen Medium ausgesetzte Bauteile zwei Funktionen: Den Einschluss des heißen Mediums und den Schutz anderer, möglicherweise weniger hitzebeständiger Bauteile oder Komponenten vor Überhitzung oder thermischer Zerstörung. Demzufolge ergeben sich hohe Anforderungen vor allem an Werkstoffeigenschaften sowie die konstruktive Ausgestaltung und Montage dieser thermisch hochbelasteten Bauteile. Darüber hinaus sind häufig noch Anforderungen an die Kühlbarkeit solcher Bauteile zu berücksichtigen.

Brennkammern sind Bestandteile von Gasturbinen, die in vielen Bereichen zum Antrieb von Generatoren oder von Arbeitsmaschinen eingesetzt werden. Dabei wird der Energieinhalt eines Brennstoffs zur Erzeugung einer Rotationsbewegung einer Turbinenwelle genutzt. Der Brennstoff wird dazu von Brennern in den ihnen nachgeschalteten Brennkammern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine den Brennkammern nachgeschaltete Turbineneinheit geführt, wo es sich arbeitsleistend entspannt.

Dabei kann jedem Brenner eine separate Brennkammer zugeordnet sein, wobei das aus den Brennkammern abströmende Arbeitsmedium vor oder in der Turbineneinheit zusammengeführt sein kann. Alternativ kann die Brennkammer aber auch in einer so genannten Ringbrennkammer-Bauweise ausgeführt sein, bei der eine Mehrzahl, insbesondere alle, der Brenner in eine gemeinsame, üblicherweise ringförmige Brennkammer münden.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Austrittstemperatur erreichen, mit der das Arbeitsmedium von der Brennkammer ab- und in die Turbineneinheit einströmt. Daher werden Temperaturen von etwa 1200 °C bis 1500 °C für derartige Gasturbinen angestrebt und auch erreicht.

Bei derartig hohen Temperaturen des Arbeitsmediums sind jedoch die diesem heißen Medium, z.B. ein Heißgas, ausgesetzten Komponenten und Bauteile besonders hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Ausgestaltung mit besonders hitzebeständigen Materialien und eine Kühlung der betroffenen Komponenten, insbesondere der Brennkammer, nötig. Um thermische Verspannungen des Materials zu verhindern, welche die Lebensdauer der Komponenten begrenzt, wird in der Regel angestrebt, eine möglichst gleichmäßige Kühlung der Komponenten zu erreichen.

Die Brennkammerwand ist dazu in der Regel auf ihrer Innenseite, d.h. brennraumseitig, mit Hitzeschildelementen vollflächig ausgekleidet, so dass eine Brennkammerauskleidung gebildet ist, die den hohen Belastungen standhält und die die Brennkammerwand schützt. Die Hitzeschildelemente können auf ihrer dem heißen Medium ausgesetzten Heißseite mit besonders hitzebeständigen Schutzschichten versehen werden. Zusätzlich können die Hitzeschildelemente auf der der Heißseite gegenüberliegenden Kaltseite, die der Brennkammerwand zugewandt ist, mit einem Kühlmittel beaufschlagt und auf diese Weise gekühlt werden.

Neben den vorgenannten thermischen oder thermomechanischen Eigenschaften ist die mechanische Steifigkeit bzw. Festigkeit des Hitzeschildelements in der Betriebssituation, d.h. bei hohen Temperaturen, besonders zu beachten. Diese begrenzt die Wandstärke bei der konstruktiven Auslegung des Hitzeschildelements, die wiederum bei der Kühleffizienz unmittelbar zu Buche schlägt.

Aufgabe der Erfindung ist es daher ein thermisch hochbelastbares und möglichst gut kühlbares Hitzeschildelement anzugeben. Das Hitzeschildelement soll dabei eine höhere Belastbarkeit ohne Vergrößerung der Wandstärke oder aber eine Verringerung der Wandstärke bei gleicher Belastbarkeit ermöglichen. Insbesondere soll mit dem Hitzeschildelement auf einfache Weise eine flächige Auskleidung, insbesondere eine vollflächige Brennkammerauskleidung, realisierbar sein.

Diese Aufgabe wird erfindungsgemäß gelöst durch ein Hitzeschildelement, insbesondere für eine Brennkammer einer Gasturbine, umfassend eine Wand mit einer Heißseite und mit einer der Heißseite gegenüberliegenden Kaltseite, die zur Kühlung mit einem Kühlmittel beaufschlagbar ist, bei dem die Kaltseite mehrere ineinander übergehende Turbolatoren aufweist.

Mit den ineinander übergehenden Turbolatoren wird eine Versteifung der Wand des Hitzeschildelements bewirkt. Hierdurch wird eine wesentliche Erhöhung der Steifigkeit ohne zusätzliches Material und ohne Vergrößerung der Wandstärke erreicht. Gleichzeitig wird ein guter Wärmeaustausch zwischen der Wand und dem Kühlmittel erreicht. Es ergeben sich somit eine hohe Kühleffizienz und ein hoher Gesamtwirkungsgrad.

Die Versteifung der Wand stellt sich nicht nur im Bereich eines einzelnen Turbolators ein. Es wird vielmehr durch die Verbindung der Turbolatoren miteinander eine großflächige Versteifung bereitgestellt.

Vorteilhafte Ausgestaltungen und Weiterbildungen der Erfindung gehen aus den abhängigen Ansprüchen hervor.

Vorteilhafter Weise sind die Turbolatoren gerade ausgebildet. Die Verwendung gerader Turbolatoren ermöglicht eine hohe Steifigkeit bei einfacher Fertigung.

In besonders vorteilhafter Ausgestaltung weist die Kaltseite dabei ein Netz von sich kreuzenden Turbolatoren auf, wodurch eines besonders wirksame flächige Versteifung erzielt ist. Das Netz von sich kreuzenden Turbolatoren ist dabei auf der Kaltseite gebildet, wobei es lokal an den thermisch bzw. mechanisch besonders hoch belasteten Bereichen vorzugsweise vorgesehen ist.

In vorteilhafter erster Ausgestaltung schließen sämtliche Turbolatoren mit einer Längsachse des Hitzeschildelements den selben Winkel ein. Es ergibt sich somit eine symmetrische Anordnung der Turbolatoren, die Belastungen aus allen Richtungen gleichmäßig aufnehmen kann.

Nach einer vorteilhaften Weiterbildung schließen die Turbolatoren einen rechten Winkel ein. Alternativ kann auch ein spitzer oder stumpfer Winkel gewählt werden, je nach Kühlungsaufgabe und mechanischer Belastungssituation im Einsatzfall.

Gemäß einer vorteilhaften zweiten Ausgestaltung schließt eine erste Gruppe von Turbolatoren mit einer Längsachse des Hitzeschildelements einen ersten Winkel und eine zweite Gruppe von Turbolatoren mit der Längsachse des Hitzeschildelements einen zweiten Winkel ein. Die beiden Gruppen von Turbolatoren weisen somit unterschiedliche Neigungen gegenüber der Längsachse des Hitzeschildelements auf. Die Steifigkeit des Hitzeschildelements hängt daher von der Angriffsrichtung der Belastung ab. Durch die unterschiedliche Neigung kann somit eine gezielte Anpassung der Steifigkeit in unterschiedlichen Belastungsrichtungen erzielt werden.

Vorteilhafterweise sind die Turbolatoren derart angeordnet, dass sie auf der Kaltseite eine Struktur von aneinander grenzenden Ausnehmungen in Form von Vielecken, insbesondere Quadraten, Rauten oder Sechsecken, bilden. Eine Struktur von aneinander grenzenden Ausnehmungen kann dabei in Form von flächig neben - und übereinander liegenden Ausnehmungen entsprechender Geometrie gebildet sein. Die Innenseite der Wand wird hierdurch mit einer Wabenstruktur oder Netzstruktur versehen. Die einzelnen Vielecke oder Waben bilden jeweils einen geschlossenen, hoch belastbaren Querschnitt und stützen sich gegenseitig ab. Es lässt sich eine wesentliche Erhöhung der Steifigkeit erzielen, und zwar wahlweise sowohl in der Längsrichtung als auch in einer Querrichtung. Vorzugsweise ist eine Ausnehmung dabei von einem Turbolator begrenzt, der konstruktiv derart ausgestaltet ist, dass bezogen auf die Strömungsrichtung des Kühlmittels stromaufwärts der Turbolator einen größeren Neigungswinkel mit der Strömungsrichtung bildet als stromabwärts.

Durch den größeren, d.h. steileren, Neigungswinkel des Turbolators stromaufwärts wird die Entstehung von Wirbeln und Turbulenzen gefördert, die zu einer erhöhten Wärmezufuhr führen. Stromabwärts erfolgt eine mit geringerem Strömungsüberstand behaftete Kühlmittelströmung durch den flacheren Neigungswinkel. Der Übergang von steilem Neigungswinkel des Turbolators zu flachem Neigungswinkel ist dabei kontinuierlich, so dass bestmögliche Wärmeabfuhr durch das Kühlmittel erfolgt.

Vorzugsweise ist der Grund der Ausnehmung und/oder der Bereich der Berührungspunkte von ineinander übergehenden Turbolatoren mit einer Verrundung mit einem Rundungsradius versehen. Die Verrundungen erweisen sich im Hinblick auf den Strömungswiderstand der Turbolatorstruktur und die thermomechanische Belastbarkeit als besonders günstige konstruktive Ausgestaltung der genannten geometrischen Bereiche.

In vorteilhafter Weiterbildung ist die Wandstärke der Wand zumindest im Bereich zwischen den Turbolatoren verringert. Diese Verringerung der Wandstärke wird dadurch ermöglicht, dass die Turbolatoren eine Versteifung der Wand bewirken. Durch die Verringerung der Wandstärke wird die Kühleffizienz nochmals erhöht. Die Turbolatoren können hierbei vorteilhaft beispielsweise beim Gießen des Hitzeschildelements als Metalleinspeisungskanäle verwendet werden. Die Wabenstruktur ist daher gut herstellbar.

Nach einer vorteilhaften Ausgestaltung weist das Hitzeschildelement mehrere mit unterschiedlichen Anordnungen von Turbolatoren versehene Abschnitte auf. Durch diese unterschiedlichen Anordnungen lässt sich in den einzelnen Abschnitten des Hitzeschildelements die Steifigkeit gezielt beeinflussen. Es ergibt sich die Möglichkeit einer konstruktiven Anpassung der Turbolatorstruktur an die in dem jeweiligen Abschnitt des Hitzeschildelements vorliegenden Belastungen hinsichtlich der thermischen und mechanischen Anforderungen im Einsatzfall.

In vorteilhafter ersten Weiterbildung sind die Abschnitte zueinander beabstandet. Hierdurch wird ein einfacher Wechsel zu den unterschiedlichen Anordnungen von Turbolatoren ermöglicht.

Vorzugsweise weist das Hitzeschildelement eine hitzebeständige Schutzschicht, insbesondere eine keramische Wärmedämmschicht, auf der Heißseite auf. Die dem Heißgas ausgesetzte Heißseitenoberfläche wird dabei vorteilhafterweise vollständig von einer Wärmedämmschicht gebildet, die durch einen Beschichtungsprozess, z.B. thermisches Spritzen oder Aufdampfen, auf das Grundmaterial des Hitzeschildelements aufgebracht wurde. Auf diese Weise ist das Hitzeschildelement beständig gegenüber den hohen Belastungen wie Sie in einer Brennkammer einer Gasturbine bei Beaufschlagung mit heißen Verbrennungsgasen vorkommen. Die Wärmedämmschicht verringert den Wärmetransport von der Heißseite zur Kaltseite des Hitzeschildelements, so dass die Brennkammerwand sich nicht so stark erwärmt und vor thermischer Beschädigung geschützt ist. Das Grundmaterial selbst besteht aus einer hochtemperaturfesten Legierung, z.B. aus einer hochtemperaturfesten Stahllegierung oder anderen typischen Hochtemperaturwerkstoffen, wie z.B. Nickel- oder Kobaltmaterialien.

Um die durch das Hitzeschildelement im Betrieb von der Heißseite zu der Kaltseite transportierte Wärme anzuführen weist die Kaltseite vorzugsweise eine mit einem Kühlmittel beaufschlagbare Kühloberfläche auf. Dazu wird in der Regel ein auch als "Prallkühlung" bezeichnetes Kühlverfahren eingesetzt. Bei der Prallkühlung wird ein Kühlmittel, in der Regel Kühlluft, durch eine Vielzahl von Bohrungen in der Brennkammerwand den Hitzeschildelementen zugeführt, so dass das Kühlmittel im Wesentlichen senkrecht auf ihre der Brennkammerwand zugewandte auf der Kaltseite gebildete Kühloberfläche prallt. Das durch den Kühlprozess aufgeheizte Kühlmittel, z.B. Kühlluft, wird anschließend aus dem Innenraum, den die Brennkammerwand mit den Hitzeschildelementen bildet, abgeführt. Ein weiterer Kühlprozess, der bei der Längshinterströmung der Hitzeschildelemente entlang der Kühloberfläche ausgenutzt wird ist die sogenannte konvektive Kühlung. Die konvektive Kühlung wird durch Strukturierung der Kühloberfläche, z.B. durch Riefen, oder Rippen, verstärkt. Analog zu der Heißseitenoberfläche kann im ersten Wandabschnitt auch die Kühloberfläche zumindest einen Oberflächenbereich mit entlang der Längsachse und der Querachse gekrümmter Oberflächenkontur aufweist. Durch beispielsweise konvexe und/oder konkave Oberflächenbereiche auf der Kühloberfläche kann neben den Vorteilen für die genannten Kühlprozessen insbesondere auch eine versteifende Wirkung auf das Hitzeschildelement erreicht werden.

In besonders bevorzugter Ausgestaltung finden die Hitzeschildelemente Anwendung in einer Brennkammer. Eine solche Brennkammer ist zum Schutz der Brennkammerwand mit einer Brennkammerauskleidung versehen, die Hitzeschildelemente gemäß der Erfindung und ihren vorteilhaften Ausgestaltungen aufweist.

Eine solche Brennkammer mit Hitzeschildelementen ist vorzugsweise Bestandteil einer Gasturbine.

Gasturbinen finden neben der Anwendung zum Erzeugen einer Vorschubkraft, beispielsweise in Luftfahrzeugen, in der Kraftwerkstechnik verbreitete Anwendung. Ein Brennstoff/Luft-Gemisch wird gezündet und verbrennt in der Brennkammer. Dabei expandieren die entstehenden, heißen Verbrennungsgase in Richtung eines der Brennkammer nachgeschalteten Turbinenraumes, treffen dort auf eine Anordnung aus Leitschaufeln und Laufschaufeln und treiben die Laufschaufeln und somit den mit den Laufschaufeln verbundenen Rotor der Turbine an. Die so gewonnene mechanische Energie kann schließlich beispielsweise zur Stromerzeugung genutzt werden.

Bezüglich der Konstruktion der Turbinenbrennkammer gibt es zwei grundsätzlich verschiedene Ansätze. So sind neben den Ringbrennkammern (RBK) noch Brennkammeranordnungen mit mehreren Einzelbrennkammern, den sogenannten Cans, bekannt. Bei der Ringbrennkammer wird von mindestens einem, üblicherweise mehreren Brennern, gezündetes Gasgemisch in eine ringförmige Brennkammer eingeleitet, in der es sich gleichmäßig verteilt und in einem ringförmigen Strom in Richtung der radial um eine Rotorwelle angeordneten Leit- und Laufschaufeln des Turbinenraumes strömt. Die bei der Verbrennung entstehenden, hohen Temperaturen wirken auf die Wandungen der Ringbrennkammer ein, so dass es zur Kühlung dieser Brennkammerwandungen besonderer Anforderungen bedarf.

Hierzu können verschiedene Kühlkonzepte zur Anwendung kommen, die bei dem Hitzeschildelement anwendbar sind. So unterscheidet man nach
- der Strömungsform: Konvektive, Prall- oder Filmkühlung
- dem Kühlmedium: Luft- oder Dampfkühlung
- der Verwendung des Kühlmediums nach Beendigung der Kühlaufgabe: z.B.
   ■ "Offene Kühlung mit Zumischung des Kühlmittels stromab der Verbrennung
   ■ "Geschlossene Kühlung" mit Rückführung des Kühlmediums in den Prozess (Verbrennung, Expansion)

Bei der gegenüber der offenen Luftkühlung sehr vorteilhaften geschlossenen Luftkühlung wird nach Abschluss der Kühlaufgabe die erwärmte Luft vollständig zur Verbrennung genutzt und die mitgeführte Wärme ebenfalls rückgeführt; die geschlossene Luftkühlung ermöglicht somit höhere Leistungen/Wirkungsgrade sowie niedrigere NOₓ-Emissionen als z.B. die offene Luftkühlung. Bei der offenen Luftkühlung wird die "kalte" Kühlluft dem Heizgasstrom stromab der Verbrennung zugemischt (niedrigere Gasturbinen-Effizienz, höhere Schadstoffwerte). Unabhängig von Konstruktionsprinzipien gilt, dass die geschlossene Luftkühlung der offenen deutlich überlegen ist.

Für einen durch die Kühlungsvorteile temperaturbeständigen und mechanisch festen Aufbau einer Ringbrennkammer kann eine Brennkammerauskleidung mit einer Anzahl von mit ineinander übergehenden Turbolatoren aufweisende Hitzeschildelementen versehen werden, so dass eine vollflächige Brennkammerauskeidung in dem Ringraum gebildet ist, ein sogenannter Brennkammerliner. Hierbei wird zwischen der Brennkammerauskleidung und dem eigentlichen Ringbrennkammergehäuse, d.h. der Brennkammerwand, ein Ringraum zur Durchleitung des Kühlmediums belassen, so dass vorteilhafterweise eine geschlossene Luftkühlung möglich ist.

Im folgenden wird die Erfindung anhand einer Zeichnung näher erläutert. Darin zeigen in vereinfachter und nicht maßstäblicher Darstellung
- FIG 1: einen Halbschnitt durch eine Gasturbine,
- FIG 2: einen Schnitt durch eine Brennkammer,
- FIG 3: in einer perspektivischen Darstellung ein Hitzeschildelement,
- FIG 4: eine Ansicht des in Figur 3 dargestellten Hitzeschildelements entlang dessen Längsachse auf die Stirnseite,
- FIG 5: eine vergrößerte Darstellung der Einzelheit X aus Figur 3,
- FIG 6: eine Draufsicht auf die Kaltseite der Wand des Hitzeschildelements in erster Ausgestaltung,
- FIG 7: eine Draufsicht auf die Kaltseite der Wand des Hitzeschildelements mit gegenüber Figur 6 modifizierter zweiter Ausgestaltung,
- FIG 8: eine Draufsicht auf die Kaltseite der Wand des Hitzeschildelements mit gegenüber Figur 6 modifizierter dritter Ausgestaltung,
- FIG 9: eine schematische Darstellung eines Ausschnitts eines Hitzeschildelements,
- FIG 10: eine schematische Darstellung eines Ausschnitts eines Hitzeschildelements mit gegenüber Figur 9 alternativer Ausgestaltung,

Gleiche Teile sind in allen Figuren mit denselben Bezugszeichen versehen.

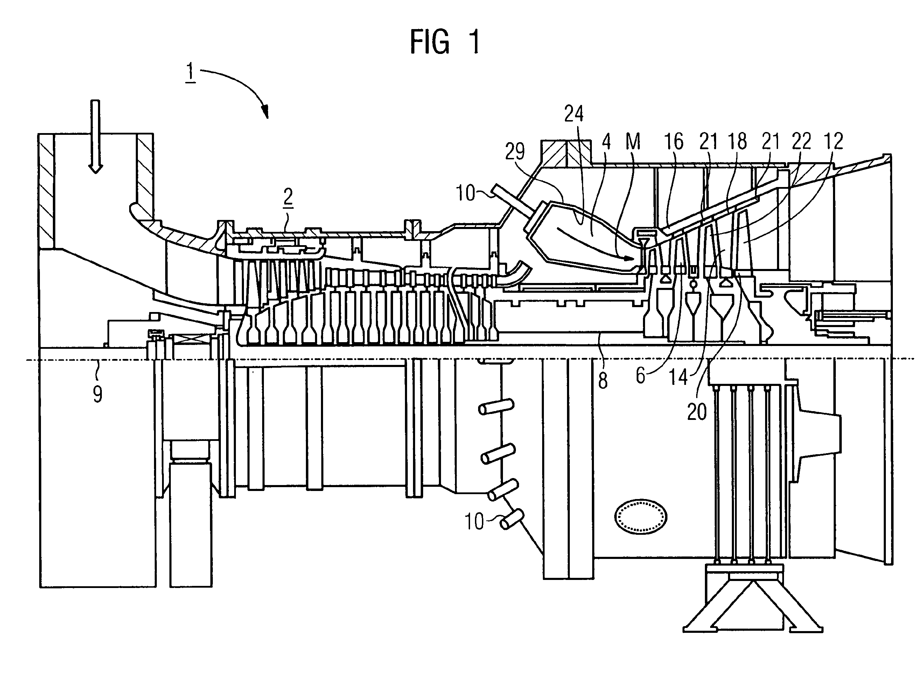

Die Gasturbine 1 gemäß Fig. 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist. Die in der Art einer Ringbrennkammer ausgeführte Brennkammer 4 ist mit einer Anzahl von Brennern 10 zur Verbrennung eines flüssigen oder gasförmigen Brennstoffs bestückt.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden heißen Medium, dem Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heizgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 21 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand 16 oder andere Gehäuse-Einbauteile vor einer thermischen Überbeanspruchung durch das die Turbine 6 durchströmende heiße Arbeitsmedium M schützt.

Die Brennkammer 4 ist von einem Brennkammergehäuse 29 begrenzt, wobei brennkammerseitig eine Brennkammerwand 24 gebildet ist. Im Ausführungsbeispiel ist die Brennkammer 4 als so genannte Ringbrennkammer ausgestaltet, bei der eine Vielzahl von in Umfangsrichtung um die Turbinenwelle 8 herum angeordneten Brennern 10 in einen gemeinsamen Brennkammerraum münden. Dazu ist die Brennkammer 4 in ihrer Gesamtheit als ringförmige Struktur ausgestaltet, die um die Turbinenwelle 8 herum positioniert ist.

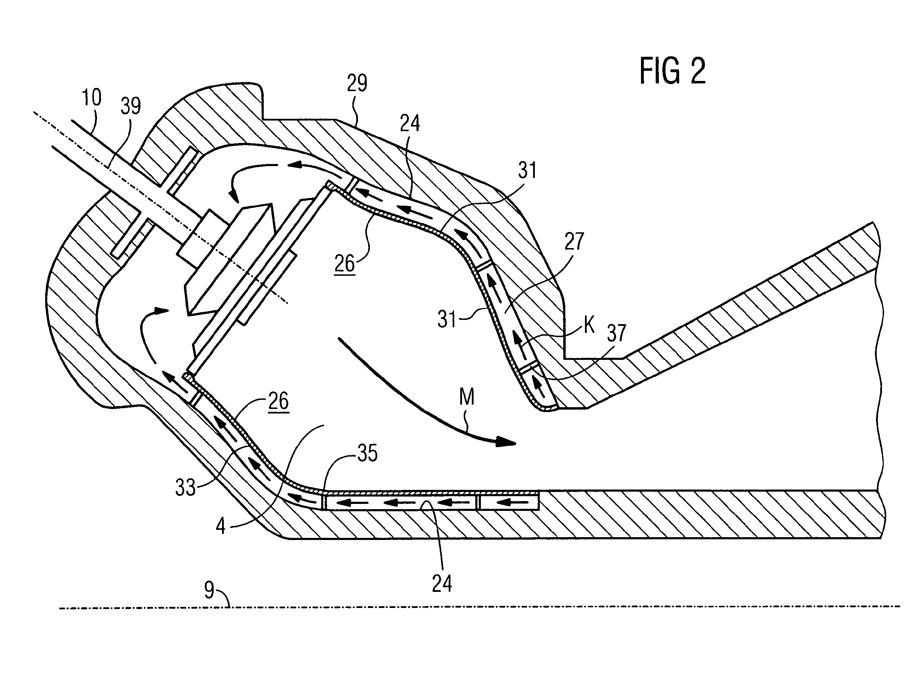

Zur weiteren Verdeutlichung der Ausführung der Brennkammerwand 24 ist in Fig. 2 die Brennkammer 4 im Schnitt dargestellt, die sich torusartig um die Turbinenwelle 8 herum fortsetzt. Wie in der Darstellung erkennbar ist, weist die Brennkammer 4 einen Anfangs- oder Einströmabschnitt auf, in den endseitig der Auslass des jeweils zugeordneten Brenners 10 mündet. In Strömungsrichtung des Arbeitsmediums M gesehen verengt sich sodann der Querschnitt der Brennkammer 4, wobei dem sich einstellenden Strömungsprofil des Arbeitsmediums M in diesem Raumbereich Rechnung getragen ist. Ausgangsseitig weist die Brennkammer 4 im Längsschnitt eine Krümmung auf, durch die das Abströmen des Arbeitsmediums M aus der Brennkammer 4 in einer für einen besonders hohen Impuls- und Energieübertrag auf die strömungsseitig gesehen nachfolgende erste Laufschaufelreihe begünstigt ist. Das Arbeitsmedium M wird beim Durchströmen der Brennkammer von einer Richtung im Wesentlichen parallel zur Brennerachse 39 in eine Richtung parallel zur Mittelachse 9 umgelenkt.

Zur Erzielung eines vergleichsweise hohen Wirkungsgrades ist die Brennkammer 4 für eine vergleichsweise hohe Temperatur des Arbeitsmediums M von etwa 1200 °C bis 1500 °C ausgelegt. Um auch bei diesen, für die Materialien ungünstigen Betriebsparametern eine vergleichsweise lange Betriebsdauer zu ermöglichen, ist die Brennkammerwand 24 auf ihrer dem Arbeitsmedium M zugewandten Seite mit einer aus Hitzeschildelementen 26 gebildeten Brennkammerauskleidung versehen. Die Hitzeschildelemente 26 sind über Befestigungsmittel 37 an der Brennkammerwand 24 unter Belassung eines Spalts befestigt. Jedes Hitzeschildelement 26 ist arbeitsmediumsseitig, das heißt auf dessen Heißseite 35, mit einer besonders hitzebeständigen Schutzschicht 31 ausgestattet. Aufgrund der hohen Temperaturen im Inneren der Brennkammer 4 ist zudem für die Hitzeschildelemente 26 ein Kühlsystem vorgesehen. Das Kühlsystem basiert dabei auf dem Prinzip der konvektiven Kühlung, bei dem Kühlmittel, z.B. Kühlluft, entlang einer Oberfläche des zu kühlenden Bauteils geführt wird. Alternativ kann das Kühlsystem für eine Prallkühlung ausgelegt sein, bei dem Kühlluft als Kühlmittel K unter ausreichend hohem Druck an einer Vielzahl von Stellen an das zu kühlende Bauteil senkrecht einer Bauteiloberfläche geblasen wird.

Das Kühlsystem ist bei einem einfachen Aufbau für eine zuverlässige, flächendeckende Beaufschlagung der Hitzeschildelemente 26 mit Kühlluft K und zudem für einen besonders geringen Kühlmitteldruckverlust ausgelegt. Dazu werden die Hitzeschildelemente 26 von ihrer Kaltseite 33 durch die Kühlluft K gekühlt, die einem zwischen dem Hitzeschildelement 26 und der Brennkammerwand 24 gebildeten Zwischenraum 27 durch geeignete - nicht näher dargestellte Zufuhrleitungen - zugestellt wird und je nach Kühlmechanismus auf bzw. entlang der Kaltseite 33 eines jeweiligen Hitzeschildelements 26 geleitet wird.
Hierbei wird das Prinzip der sehr vorteilhaften geschlossenen Luftkühlung angewendet. Nach Abschluss der Kühlaufgabe an den Hitzeschildelementen 26 wird die erwärmte Luft vollständig zur Verbrennung im Brenner 10 genutzt und die mitgeführte Wärme ebenfalls rückgeführt; die geschlossene Luftkühlung ermöglicht somit höhere Leistungen/Wirkungsgrade sowie niedrigere NOₓ-Emissionen als z.B. die offene Luftkühlung. Bei der offenen Luftkühlung wird die "kalte" Kühlluft dem Heizgasstrom stromab der Verbrennung zugemischt, was zu einer niedrigeren Gasturbinen-Effizienz und höheren Schadstoffwerten führt.

Für einen temperaturbeständigen Aufbau der als Ringbrennkammer ausgestalteten Brennkammer 4 ist eine Brennkammerauskleidung mit einer einer Anzahl von von temperaturfesten und gemäß der Erfindung durch Turbolatoren mechanisch stabilen formversteiften Hitzeschildelementen 26 vorgesehen. Auf diese Weise ist eine vollflächige weitgehend leckagefreie Brennkammerauskleidung in dem Ringraum gebildet, ein sogenannter Brennkammerliner.

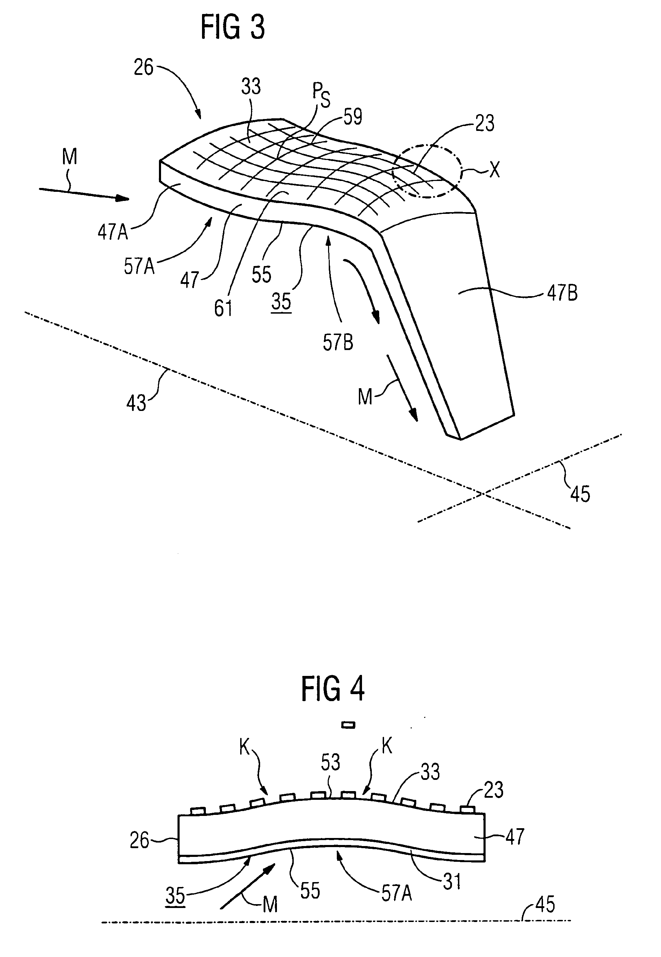

Das Schwingungsverhalten des Hitzeschildelements 26 ist hierbei durch eine gezielte geometrische Konturgebung günstig beeinflusst, so dass die Eigenschwingungsmoden des Hitzeschildelements 26 gegenüber der Anregungsfrequenz einer Verbrennungsschwingung erhöht ist. Resonanzeffekte durch positive Rückkopplung können somit vermieden werden. Zur Illustration zeigt Fig. 3 in vereinfachter perspektivischer Darstellung ein Ausführungsbeispiel eines Hitzeschildelements 26 sowie Fig. 4 eine etwas vergrößerte Ansicht der Stirnseitenfläche des in Figur 3 dargestellten Hitzeschildelements 26. Das Hitzeschildelement 26 erstreckt sich entlang einer Längsachse 43 und einer senkrecht zur Längsachse 43 verlaufenden Querachse 45. Das Hitzeschildelement 26 umfasst eine Wand 47, die eine Heißseite 35 mit einer von dem heißen Arbeitsmedium M beaufschlagbaren Heißseitenoberfläche 55 aufweist. Der Heißseite 35 der Wand 47 gegenüberliegend ist eine Kaltseite 33 vorgesehen. Die Wand 47 weist zwei Wandabschnitte 47A, 47B auf, wobei ein erster Wandabschnitt 47A einem zweiten Wandabschnitt 47B entlang der Längsachse 43 in Strömungsrichtung des Arbeitsmediums M vorgeordnet ist. Weiterhin ist der zweite Wandabschnitt 47B gegenüber dem ersten Wandabschnitt 47A in Richtung der Heißseite 35 geneigt, so dass der zweite Wandabschnitt 47B einen Neigungswinkel mit der Längsachse 43 bildet. Die Neigung ist dabei so eingestellt, dass eine konstruktive Anpassung zur Auskleidung einer Brennkammerwand 24 (vgl.Figur 2) erreicht ist. Auf der Heißseitenoberfläche 55 sind im ersten Wandabschnitt 47A Oberflächenbereiche 57A, 57B gebildet. Die Oberflächenbereiche 57A, 57B weisen jeweils entlang der Längsachse 43 und entlang der Querachse 45 eine nicht-planare, das heißt gekrümmte Oberflächenkontur auf. Der Oberflächenbereich 57A ist dabei in Richtung der Querachse 45 konkav gekrümmt und in Richtung der Längsachse 45 konvex gekrümmt, so dass im Oberflächenbereich 57A eine Sattelfläche 59 mit einem Sattelpunkt Pₛ gebildet ist. Der zweite Oberflächenbereich 57B weist eine sphärisch Oberflächenkontur auf und ist entlang der Längsachse 43 in Strömungsrichtung des Arbeitsmediums M, z.B. des heißen Verbrennungsgases, dem Oberflächenbereich 57A nachgeordnet, wobei der Oberflächenbereich 57A in den zweiten Oberflächenbereich 57B über einen Übergangsbereich 61 übergeht.

Die Kaltseite 33 der Wand 47 weist mehrere Turbolatoren 23 auf. Diese dienen primär der Verbesserung des Wärmeaustauschs zwischen der mit dem heißen Arbeitsmedium M auf der Heißseite 35 beaufschlagten Wand 47 und dem Kühlmittel K, welches beim Entlangströmen an der Kaltseite 33 durch die Turbolatoren 23 stark verwirbelt wird. Dabei ist auf der Kaltseite 33 ein Netz von sich kreuzenden Turbolatoren 23 gebildet, wodurch neben der Kühleffizienzerhöhung vorteilhafterweise überdies die mechanische Stabilität, d.h. die Steifigkeit, des Hitzeschildelements deutlich erhöht ist. Die Netzstruktur der Turbolatoren 23 ist durch eine Vielzahl von ineinander übergehender Turbolatoren 23 erzielt.

Um das Hitzeschildelement 26 besonders beständig gegenüber der Beaufschlagung mit heißem Arbeitsmedium M auszugestalten, ist auf dessen Heißseite 35 eine hitzebeständige Schutzschicht 31 aufgebracht, z.B. eine keramische hochtemperaturresistente Wärmedämmschicht, wie in Figur 3 gezeigt ist. Zu Kühlungszwecken ist auf der Kaltseite 33 eine Kühloberfläche 53 gebildet, die mit einem Kühlmittel K, z.B. Kühlluft, beaufschlagt wird. Die Kühloberfläche 53 selbst ist dabei durch die Turbolatoren 23 gebildet. Somit ist beim Einsatz des Hitzeschildelements 26 zur Auskleidung einer Brennkammer 4 sowohl der Einschluss und die Strömungsführung des heißen Arbeitsmediums M als auch der Schutz anderer, möglicherweise weniger hitzebeständiger Bauteile oder Komponenten, wie z.B. der Brennkammerwand 24, vor Überhitzung oder thermischer Zerstörung gewährleistet

Mit dem Hitzeschildelement 26 der Erfindung ist daher ein thermisch hochbelastbares und gut kühlbares Bauteil angegeben, mit dem auf einfache Weise eine flächige Auskleidung, insbesondere eine vollflächige Brennkammerauskleidung, realisierbar ist, wobei die Brennkammerauskleidung durch die ineinander übergehenden Turbolatoren 23 auf der Kaltseite 33 besonders effektiv kühlbar und mechanisch außerordentlich stabil ist.

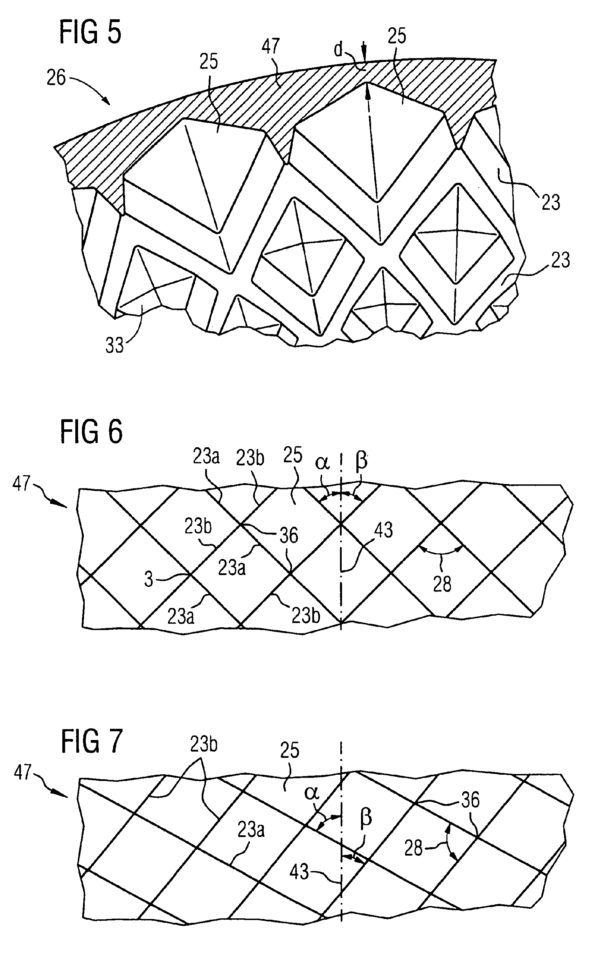

FIG 5 zeigt zu einer detaillierteren Illustration eine vergrößerte Darstellung der Einzelheit X aus FIG 3. Die Turbolatoren 23 sind gerade ausgebildet und gehen ineinander über. Im dargestellten Ausführungsbeispiel wird von jeweils vier Turbolatoren 23 in einer Art Ringschluss eine Ausnehmung 25 begrenzt. Die Wandstärke d der Wand 47 verringert sich ausgehend von den Turbolatoren 23 kontinuierlich bis zur Mitte der Ausnehmung 25. Diese Verringerung der Wandstärke d wird dadurch ermöglicht, dass sich die Turbolatoren 23 konstruktiv aneinander abstützen und hierdurch die Steifigkeit des Hitzeschildelements 26 wesentlich erhöhen. Aufgrund der verringerten Wandstärke d ergibt sich eine höhere Kühleffizienz. Es wird daher weniger Kühlmittel K benötigt, so dass sich ein höherer Gesamtwirkungsgrad der Brennkammer 4 und damit der Gasturbine 1 ergibt.

Die Turbolatoren 23 sind im Querschnitt näherungsweise dreieckig ausgestaltet und verjüngen sich ausgehend von der Wand 47 in den Raum mit dem Kühlmittel K. Sie können beispielsweise bei einem Gießvorgang beim Gießen des Hitzeschildelements 26 als Metalleinspeisungskanäle dienen. Das Hitzeschildelement 26 der Erfindung ist somit einfach herstellbar.

Die Figuren 6 bis 8 zeigen jeweils eine schematische Draufsicht auf die Kaltseite 33 der Wand 47 des Hitzeschildelements 26. Hierbei sind drei unterschiedliche Ausgestaltungen dargestellt, die im folgenden kurz erläutert werden: Bei der Ausgestaltung gemäß FIG 6 schließen sämtliche Turbolatoren 23A,23B den selben Winkel α, β mit der Längsachse 43 des Hitzeschildelements 26 ein. Die Turbolatoren 23A,23B schließen miteinander einen rechten Winkel 28 ein. Die von den Turbolatoren 23A,23B begrenzten Ausnehmungen 25 bilden somit Quadrate.

Ein Turbolator 23A,23B erstreckt sich jeweils zwischen Berührungspunkten 36. Im Bereich der Berührpunkte 36 gehen die Turbolatoren 23A,23B ineinander über. Durch die Verwendung gerader Turbolatoren 23A,23B wird die Herstellung vereinfacht. Es ergibt sich eine hohe Steifigkeit.

Bei der Ausgestaltung gemäß FIG 7 schließt eine erste Gruppe von Turbolatoren 23A einen ersten Winkel α mit der Längsachse 43 ein, während eine zweite Gruppe von Turbolatoren 23B einen zweiten Winkel β mit der Längsachse 43 einschließt. Der Winkel 28 zwischen den Turbolatoren 23A,23B ist in dieser Ausgestaltung größer als 90 Grad. Es ergibt sich entsprechend einer Ausnehmung 25 in Form einer Raute. Durch die unterschiedliche Neigung der Turbolatoren 23A,23B gegenüber der Längsachse 43 ergibt sich eine unterschiedliche Steifigkeit des Hitzeschildelements 26 in Abhängigkeit von der Belastungsrichtung. Es wird somit eine gute Anpassung an unterschiedliche Randbedingungen im Einsatzfall des Hitzeschildelements 26 erreicht.

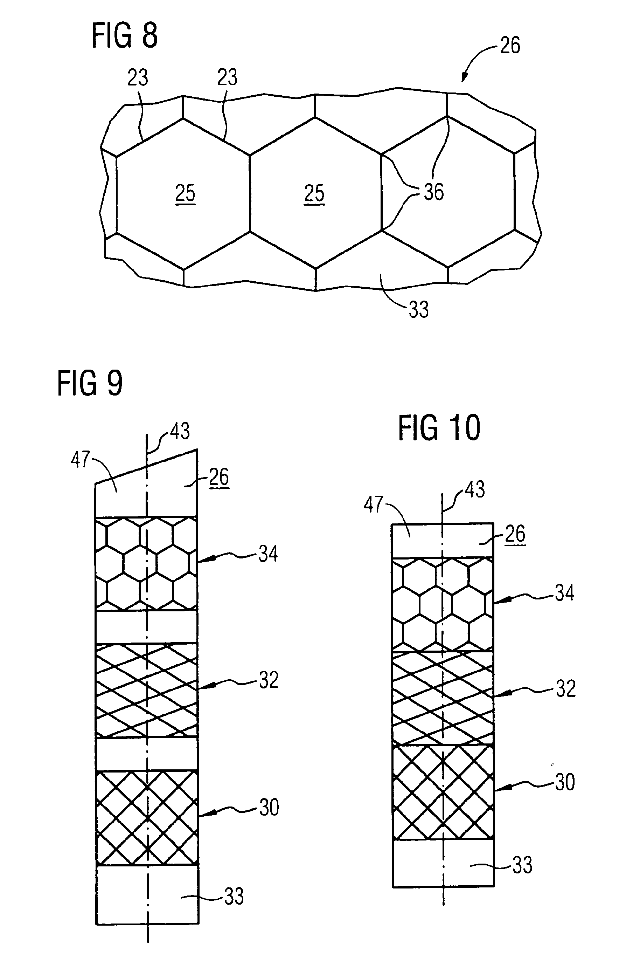

Bei der Ausgestaltung gemäß FIG 8 bilden jeweils sechs Turbolatoren 23 eine Ausnehmung 25 in Form eines Sechsecks. Es ergibt sich eine Wabenstruktur, die die Steifigkeit des Hitzeschildelements 26 wesentlich erhöht.

Es können selbstverständlich auch andere geeignete Anordnungen von Turbolatoren 23 verwendet werden, die eine entsprechende flächige Struktur von Turbolatoren auf der Kaltseite 33 des Hitzeschildelements 26 bilden. Vorteilhaft werden die Turbolatoren 23 derart angeordnet, dass die in den Figuren 6 bis 8 dargestellten Ausnehmungen 25 entstehen. Diese Ausnehmungen 25 weisen in der Draufsicht einen geschlossenen Querschnitt und daher eine hohe Steifigkeit auf. Alternativ können die Turbolatoren 23 auch in Form eines V oder X angeordnet werden.

Als besonders günstig erweist es sich auch, die Bereiche der Berührpunkte 36 der Turbolatoren 23 und den Grund der Ausnehmung 25 abzurunden bzw. auszurunden. Dadurch entsteht ein Netz aus ausgerundeten geschlossenen Vielecken (Quadrate, Rauten, Sechsecke, etc.) die als Fachwerk dienen und insbesondere die Quersteifigkeit des Hitzeschildelements 26 erhöhen. Hierdurch kann die mittlere Wandstärke d bei gleichbleibender Steifigkeit verringert werden, so dass die Kühleffizienz dadurch erheblich ansteigt. Zudem wird ein "dimpleähnlicher" Effekt auf die Turbulenz der Strömung des Kühlmittels K erreicht, wodurch der Wärmeübergang auf der Wand 47 auf das Kühlmittel K ansteigt. Zu Optimierungszwecken kann auch die Neigung der Turbolatoren 23 bezogen auf die Strömungsrichtung des Kühlmittels K stromabwärts flacher und stromaufwärts steiler gehalten werden, wodurch ein hoher Wärmetransfer auf das Kühlmittel begünstigt ist.

FIG 9 zeigt eine schematische Darstellung eines Ausschnitts eines Hitzeschildelements 26, welches mehrere mit unterschiedlichen Anordnungen von Turbolatoren 23 versehene Abschnitte 30,32,34 aufweist. Die Anordnung des Abschnitts 30 entspricht hierbei der Darstellung gemäß FIG 6, während die Abschnitte 32,34 entsprechend den Figuren 7 und 8 ausgebildet sind. Die einzelnen Abschnitte 30,32,34 sind zueinander entlange der Längsachse 43 beabstandet. Im Bereich zwischen den Abschnitten 30,32,34 können Querschnitts- oder Formänderungen des Hitzeschildelements 26 mit geringem Fertigungsaufwand vorgenommen werden. Zum Erreichen der erforderlichen Steifigkeit wird die Wandstärke d der Wand 47 in diesen Übergangsbereich bei Bedarf entsprechend erhöht. Die Verbrennung unterschiedlicher Anordnungen von Turbolatoren 23 ermöglicht eine gezielte Beeinflussung der Steifigkeit des Hitzeschildelement 26 in den einzelnen Abschnitten 30,32,34. Es ergibt sich somit eine sehr flexible Anpassbarbeit an unterschiedliche Randbedingungen entlang der Längsachse 43, wobei eine turbolatorbasierte Kühlstruktur auf der Kaltseite 33 je nach Anforderung ausgelegt und realisiert werden kann. Die Abschnitte 30,32,34 können in alternativer Darstellung auch ineinander übergehen, wie schematisch anhand eines Hitzeschildelements 26 in FIG 10 gezeigt ist. Die Turbolatoren 23 der einzelnen Abschnitte 30,32,34 gehen hierbei in nicht näher dargestellten Berührpunkten oder Berührlinien ineinander über. Es ergibt sich somit eine durchgehende, d.h. kontinuierliche Versteifung des Hitzeschildelements 26 entlang dessen Längsachse 43.

Die vorliegende Erfindung ermöglich eine deutliche Erhöhung der Steifigkeit durch eine gezielte Anordnung und Strukturierung mit zur Verbesserung des Wärmeaustauschs und der Erhöhung der mechanischen Steifigkeit vorgesehenen Turbolatoren 23. Bei gleicher thermischer und/oder mechanischer Belastung kann die Wandstärke d der Wand 47 verringert werden. Durch diese Verringerung der Wandstärke d wird die Kühleffizienz gesteigert, so dass sich insgesamt ein höherer Gesamtwirkungsgrad der Brennkammer 4 und damit der Gasturbine 1 ergibt.

## Patentansprüche

1. Hitzeschildelement (26), insbesondere für eine Brennkammer (4) einer Gasturbine (1), umfassend eine Wand (47) mit einer Heißseite (35) und mit einer der Heißseite (35) gegenüberliegende Kaltseite (33), die mit einem Kühlmittel (K) beaufschlagbar ist, bei dem die Kaltseite (33) mehrere Turbolatoren (23) zur Verbesserung des Wärmeaustauschs zwischen der Wand (47) und dem Kühlmittel (K) aufweist, wobei die Turbolatoren (23) ein ineinander übergehen.

2. Hitzeschildelement (26) nach Anspruch 1,
**dadurch gekennzeichnet, dass** die Kaltseite (33) ein Netz von sich kreuzenden Turbolatoren aufweist.

3. Hitzeschildelement (26) nach Anspruch 1 oder 2,
**dadurch gekennzeichnet, dass** die Turbolatoren (23) gerade ausgebildet sind.

4. Hitzeschildelement (26) nach Anspruch 3,
**dadurch gekennzeichnet, dass** die Turbolatoren (23A, 23B) mit einer Längsachse (43) denselben Winkel (α, β) einschließen.

5. Hitzeschildelement (26) nach Anspruch 3 oder 4,
**dadurch gekennzeichnet, dass** die Turbolatoren (23A, 23B) einen rechten Winkel einschließen.

6. Hitzeschildelement (26) nach Anspruch 3,
**dadurch gekennzeichnet, dass** eine erste Gruppe von Turbolatoren (23A) mit der Längsachse (43) einen ersten Winkel (α) und eine zweite Gruppe von Turbolatoren (23B) mit der Längsachse einen zweiten Winkel (β) einschließt.

7. Hitzeschildelement (26) nach einem der Ansprüche 1 bis 6,
**dadurch gekennzeichnet, dass** die Turbolatoren (23) derart angeordnet sind, dass sie auf der Kaltseite (33) eine Struktur von aneinander grenzenden Ausnehmungen (25) in Form von Vielecken, insbesondere Quadraten, Rauten oder Sechsecken, bilden.

8. Hitzeschildelement (26) nach Ansprüche 7,
**dadurch gekennzeichnet, dass** eine Ausnehmung (25) von einem Turbolator (23) begrenzt ist, der konstruktiv derart ausgestaltet ist, dass auf die Strömungsrichtung des Kühlmittels (K) bezogen stromaufwärts der Turbolator (23) einen größeren Neigungswinkel mit der Strömungsrichtung bildet als stromabwärts.

9. Hitzeschildelement (26) nach Ansprüche 7 oder 8,
**dadurch gekennzeichnet, dass** der Grund der Ausnehmung (25) und/oder der Bereich der Berührpunkte (36) von ineinander übergehenden Turbolatoren 23 eine Verrundung mit einem Rundungsradius aufweist.

10. Hitzeschildelement (26) nach einem der Ansprüche 1 bis 9,
**dadurch gekennzeichnet, dass** die Wandstärke (d) der Wand (47) zumindest im Bereich zwischen den Turbolatoren (23) verringert ist.

11. Hitzeschildelement (26) nach einem der vorhergehenden Ansprüche,
**gekennzeichnet durch** mehrere mit unterschiedlichen Anordnungen von Turbolatoren (23) versehene Abschnitte (30, 32, 34).

12. Hitzeschildelement (26) nach Anspruch 11,
**dadurch gekennzeichnet, dass** die Abschnitte (30, 32, 34) zueinander beabstandet sind.

13. Hitzeschildelement (26) nach Anspruch 11,
**dadurch gekennzeichnet, dass** die Abschnitte (30, 32, 34) ineinander übergehen.

14. Hitzeschildelement (26) nach einem der vorhergehenden Ansprüche,
**gekennzeichnet durch** mehrere mit unterschiedlichen Anordnungen von Turbolatoren (23) versehene Abschnitte (30, 32, 34).

15. Hitzeschildelement (26) nach einem der vorhergehenden Ansprüche,
**gekennzeichnet durch** eine hitzebeständige Schutzschicht (31), insbesondere eine keramische Wärmedämmschicht, auf der Heißseite (35).

16. Brennkammer (4) mit einer Brennkammerauskleidung umfassend Hitzeschildelemente (26) nach einem der vorhergehenden Ansprüche.

17. Brennkammer(4) nach Anspruch 12
**gekennzeichnet durch** eine Ausgestaltung als Ringbrennkammer.

18. Gasturbine (1) mit einer Brennkammer (4) nach Anspruch 13 oder 14.
